# FASCICULE DE BREVET EUROPEEN

(11) **EP 2 984 049 B1**
(45) Date de publication et mention de la délivrance du brevet: **06.02.2019**
(21) Numéro de dépôt: 14726673.8
(22) Date de dépôt: 10.04.2014
(51) Int. Cl.: C03C 1/00, C03C 17/00

(54) **PROCÉDÉ DE FABRICATION D'UN SUBSTRAT TRANSPARENT COLORÉ**
VERFAHREN ZUM HERSTELLEN EINES GEFÄRBTEN TRANSPARENTEN SUBSTRATS
PROCESS FOR PRODUCING A COLOURED TRANSPARENT SUBSTRATE

(30) Priorité: 11.04.2013 FR 1353256
(43) Date de publication de la demande: 17.02.2016
(73) Titulaire: Saint-Gobain Glass France, 92400 Courbevoie (FR); Centre National de la Recherche Scientifique (C.N.R.S.), 75794 Paris Cedex 16 (FR)
(72) Inventeur: BALAN, Lavinia, F-68720 Hochstatt (FR); LOUGNOT, Daniel, F-90100 Chavannes Les Grands (FR); SOPPERA, Olivier, F-68100 Mulhouse (FR); DEKONINCK, Alexandra, F-95600 Eaubonne (FR); GOLETTO, Valérie, F-94700 Maisons-Alfort (FR)
(74) Mandataire: Saint-Gobain Recherche
(86) Numéro de dépôt international: PCT/FR2014/050875
(87) Numéro de publication internationale: WO 2014/167256

(56) Documents cités:
- EP-A1- 0 820 966
- DE-A1- 4 130 550
- US-A1- 2002 004 172
- US-A1- 2002 018 900
- US-A1- 2013 034 702

## Description

L'invention se rapporte au domaine des substrats colorés, notamment des verres colorés pour bâtiments ou automobiles, en particulier à usage d'habitation ou de bureau. Elle concerne plus particulièrement un procédé de fabrication d'un substrat transparent et coloré destiné à la décoration, notamment pour équiper des façades extérieures ou pour la décoration intérieure (vitres colorées, objets décoratifs..).

La coloration d'un substrat transparent, notamment d'une feuille de verre, peut être effectuée directement «dans la masse », c'est-à-dire en incluant des agents colorants dans la composition vitrifiable, avant son élaboration et sa mise en forme. Il est également possible de déposer des couches colorées sur tout ou partie d'au moins une face du substrat. La décoration des façades de bâtiments est actuellement réalisée en déposant une couche d'émail colorée à la surface d'une feuille de verre, le plus souvent par sérigraphie. Les motifs décoratifs ainsi obtenus sont opaques. Or la demande actuelle est forte pour des couches colorées transparentes.

Le brevet US 5,731,091 décrit des couches vitreuses colorées transparentes, obtenues à partir d'une composition comprenant un silane hydrolysable et un organosilane fonctionnalisé, déposée sur la surface du substrat en verre puis traitée thermiquement afin de densifier la couche.

Le brevet EP 0909745 décrit une composition pour une coloration transparente d'une surface de verre comprenant de fines particules d'or et d'argent, un agent de fixation de type organométallique, une résine de liant et un solvant organique. La composition est déposée sur le substrat puis est traitée thermiquement par séchage à environ 150°C puis cuisson à une température de 700°C.

EP 0 820 966 A1 décrit un procédé de revêtement d'un substrat, dans lequel la solution de revêtement comprend une solution d'acétylacétone et d'isopropoxyde de titane et une solution d'éthylcellulose et d'acide chroloaurique, qui est appliquée sur un substrat de verre et est durcie à température élevée.

DE41 30 550 A1 décrit la préparation d'un sol par hydrolyse acide et polycondensation de 3-méthacryloxypropyltriméthodsilane avec du tétrapropylate de zirconium en présence d'un photoinitiateur, qui est ensuite déposé sur un substrat, puis durci au moyen d'UV.

La présente invention a pour but de fournir un procédé de fabrication d'un substrat transparent pourvu sur tout ou partie d'au moins une de ses faces d'au moins une couche colorée et transparente.

Un autre but de la présente invention est d'obtenir des couches transparentes colorées de bonne qualité, notamment exemptes de craquelures et qui sont aptes à résister au traitement thermique de trempe lorsqu'elles sont déposées sur des substrats trempables.

Le procédé de fabrication d'un substrat coloré comportant au moins une couche colorée et transparente comprend les étapes consistant à :
- déposer, sur tout ou partie d'au moins une des faces du substrat, au moins une couche d'une composition comprenant
   (A) un sol obtenu par hydrolyse acide et polycondensation d'au moins un composé de formule

      MXₙY₄₋ₙ (I),

      dans laquelle
      M représente un atome de S, Ti, Zr, Al, Sn, Fe, Y, V
      X représente des groupements hydrolysables, identiques ou différents, Y représente des groupements fonctionnels, identiques ou différents, l'un des Y ayant au moins une fonction photopolymérisable,
      n peut prendre les valeurs 0, 1, 2, 3 ou 4
      ou un oligomère dérivé de ce composé (I),
   (B) au moins un précurseur d'un sel métallique, le sel métallique étant un halogénure tel qu'un chlorure ou un bromure, un nitrure et un acétate d'un métal choisi parmi l'or, l'argent, le platine ou le palladium et
   (C) au moins un composé photoamorceur, et
   (D) éventuellement un monomère photopolymérisable, puis
- exposer le substrat revêtu d'au moins ladite couche à une source de lumière UV.

Dans le procédé selon la présente invention, l'apparition de la couleur est effectuée par la réduction par photochimie du précurseur (B) présent dans la composition, en présence du photoamorceur. Le précurseur de sel métallique (B) est une espèce chimique dont un des constituants est un ion métallique. L'irradiation sous lumière UV permet avantageusement de provoquer, simultanément à l'apparition de la couleur, la réticulation des fonctions polymérisables. Ainsi, la croissance des pigments à l'échelle nanométrique est contrôlée et garantit la transparence de la couche. L'exposition de la feuille revêtue à une source de lumière UV permet la fixation de la ou des couches. La réticulation des fonctions polymérisables simultanée permet également de maintenir les pigments dans la couche, de limiter leur agrégation et d'éviter leur migration à la surface. La couleur du substrat ainsi obtenu est répartie de façon homogène sur la totalité de la couche. L'étape de fixation de la couche présente l'avantage d'être facilement et rapidement mise en oeuvre. La photopolymérisation offre l'avantage d'être quasi-instantanée puisque le passage de la molécule au matériau hybride peut s'effectuer en quelques dixièmes de seconde sous irradiation intense de lumière UV.
Le procédé selon l'invention permet avantageusement d'obtenir des couches colorées de bonne qualité sur un substrat, sans qu'une étape de chauffage de la couche pour obtenir le développement de la couleur ne soit nécessaire. Dans les procédés de l'art antérieur, il est nécessaire de chauffer les substrats revêtus à des températures relativement élevées, typiquement au-dessus de 400°C. Le procédé selon l'invention permet de s'affranchir de cette étape de chauffage et est donc applicable à une plus grande variété de substrat.

D'autre part, le procédé selon l'invention permet de générer in-situ des nanoparticules dans une matrice minérale ou hybride, en particulier faite par le procédé sol-gel, ce qui présente un avantage intéressant au niveau Environnement, Hygiène et Sécurité puisque l'opérateur n'a pas besoin de manipuler directement de poudre comprenant des nanoparticules.

L'utilisation de précurseurs de sels métalliques de pigments inorganiques permet de plus d'assurer la tenue en température de la couleur et la rend donc compatible avec un procédé de trempe du substrat revêtu, si un tel traitement thermique est nécessaire pour les applications du produit obtenu.

Avantageusement, pour que la couche garde sa transparence, la taille des nanoparticules est comprise entre 1 et 100 nm. De façon préférée, les particules ont une taille inférieure à 50 nm.

En fonction du choix combiné du précurseur du sel métallique, de la taille et de la forme des nanoparticules et de la nature de la matrice, différentes couleurs sont envisageables.

Le substrat est une feuille de matériau transparent, résistant aux sources de lumière UV. Il peut être en plastique ou en verre. Si le produit final nécessite que le substrat coloré soit trempé, le substrat est une feuille de verre.

Le sol peut être préparé dans un solvant de type alcoolique. L'hydrolyse acide est réalisée avec un agent d'initiation.

Le composé de formule (I) précurseur de la matrice peut comprendre des groupements X hydrolysables et des groupements Y possédant au moins une fonction photopolymérisable. Avantageusement, le groupement Y comprend au moins un groupement éthylénique insaturé ou un groupement époxy. Parmi les groupements éthyléniques insaturés, on peut citer par exemple les fonctions acrylates ou les fonctions méthacrylates.

Dans le cas particulier où le composé (I) ne comprend que des groupements hydrolysables (cas où n est égal à 4), la fonction polymérisable est introduite dans la composition soit en rendant obligatoire la présence d'un monomère photopolymérisable (D), soit en introduisant ladite fonction polymérisable lors de l'hydrolyse acide du composé (I) par l'intermédiaire de l'agent d'initiation qui peut comprendre une telle fonction. Ainsi, les fonctions photopolymérisables sont introduites dans la composition par un composé autre que le précurseur du sol lui-même.

Avantageusement, la première étape du procédé consiste à déposer sur tout ou une partie d'au moins une des faces du substrat, au moins une couche constituée du sol (A), du précurseur du sel métallique (B) et du composé photoamorceur (C), et éventuellement, en fonction de la nature du composé (I) précurseur du sol (A), d'un monomère photopolymérisable (D). Le procédé selon l'invention permet ainsi avantageusement d'obtenir des couches colorées transparentes sans l'utilisation d'un agent stabilisant. En effet, la réticulation de la matrice minérale ou hybride permet directement de contrôler l'état d'agrégation des nanoparticules.

De préférence, le métal M est le S, le Ti ou le Zr. Encore plus préférentiellement, le métal est le Ti ou le Zr. Les métaux tels que le titane et le zirconium permettent notamment d'avoir accès à une plus grande variété de couleurs d'une part, et d'autre part, d'obtenir des couches plus réfléchissantes, notamment en raison de leur indice de réflexion élevé. Ces métaux présentent également une meilleure résistance mécanique et notamment un meilleur comportement lors d'un traitement thermique.

A titre d'exemple, le composé de formule (I) est le 3-méthacryloxypropryltriméthoxysilane (MAPTMS) qui est un précurseur de silice transparent dans le visible et photopolymérisable, ou le 3-glycidoxypropyltriméthoxysilane (GPTMS).
Il peut également être choisi parmi le 3-méthacryloxypropyltriéthoxysilane, 3-méthacryloxypropyltriisopropoxysilane, le 3-méthacryloxymethyltriméthoxysilane, Le 3-méthacryloxyméthyltriéthoxysilane, et le 3-glycidoxypropyltriéthoxysilane.
Le composé (I) peut également être un propoxyde métallique tel que le tétrapropoxyde ou tétraisopropoxyde de zirconium ou de titane, le tétraéthoxyde de zirconium ou de titane, le tétraacétylacetonate de zirconium ou de titane, le tétraéthoxysilane (TEOS).
La quantité de sol dans la composition dépend de la nature du composé de formule (I). Par exemple, la teneur pondérale du sol (A) calculée sur la base de l'ensemble des composés (A), (B), (C) et (D), peut varier de 80 à 99,8%

L'hydrolyse nécessaire pour l'obtention du sol (A) est effectuée à l'aide d'un agent d'initiation. On utilise un milieu acide comme agent d'initiation. On peut citer par exemple comme acide, l'acide chlorhydrique, l'acide nitrique, l'acide sulfurique, l'acide bromique, les acides acryliques tel que l'acide méthacrylique. La quantité d'acide nécessaire pour réaliser l'hydrolyse et l'obtention du sol peut varier en fonction du métal M. Lorsque le métal est Ti ou Zr, l'agent acidifiant préféré est un acide méthacrylique et le ratio entre la quantité de métal et la quantité d'acide, exprimées en volume, est avantageusement compris entre 1:1 et 1:2. De façon avantageuse, lorsque l'acide utilisé est l'acide méthacrylique, celui-ci joue également un rôle d'agent complexant. Si le composé (I) ne comprend pas de fonction photopolymérisable, l'utilisation de l'acide méthacrylique comme agent d'initiation permet d'obtenir un sol photopolymérisable après hydrolyse.

Lorsque le métal est S, l'agent acidifiant est par exemple de l'acide chlorhydrique et le ratio entre la quantité de Si et la quantité d'acide, exprimées en volume est compris entre 10 :1 et 5 :1. Si le composé (I) ne comprend pas de fonction polymérisable, et que l'acide utilisé est l'acide chlorhydrique, la présence d'un monomère photopolymérisable est indispensable.

Selon un mode de réalisation, le sol (A) comprend en outre un organosilane de formule

R¹ₐSiX₍₄₋ₐ₎ (II)

dans laquelle
R¹ représente un radical non hydrolysable,
Xa la signification donnée précédemment dans la formule (I),
a est égal à 0, 1, 2 ou 3,
ou un oligomère dérivé de ce silane.

Dans la formule (II), le radical R¹ est de préférence un radical alkyle, avantageusement en C₁-C₆, un radical alcényle, avantageusement en C₂-C₆, par exemple vinyle, propényle ou butényle, un radical alcynyle, avantageusement en C₂-C₆, par exemple acétynyle ou propargyle, ou un radical aryle, avantageusement en C₆-C₁₀, par exemple phényle ou naphtyle. Il peut porter un groupe fonctionnel.

De préférence, le rapport pondéral composé de formule (I):composé de formule (II) varie de 5:95 à 50:50, avantageusement de 15:85 à 25:75.

Le précurseur de sel métallique (B) est une espèce soluble qui va libérer un sel métallique, et permet la formation de nanoparticules de pigments. Les nanoparticules métalliques offrent notamment une large gamme de couleur en fonction de leur taille, de leur forme et de l'indice de réfraction de la matrice dans laquelle elles sont incorporées.

Le métal est choisi parmi l'or, l'argent, le platine ou le palladium et les sels métalliques sont choisis parmi les halogénures tels que les chlorures et les bromures, les nitrures et les acétates des métaux précités. On citera par exemple comme sels métalliques, le tétrachloroaurate, le tétrabromoaurate, le nitrate d'argent, l'acétate de palladium, le chlorure de palladium, le chlorure de platine.

La quantité de précurseur de sel métallique dans la composition varie également selon la nature du composé de formule (I). Par exemple, la teneur pondérale du précurseur (B) calculée sur la base de l'ensemble des composés (A), (B), (C) et (D), peut varier de 0,1 à 10% préférentiellement de 0,5 à 5%

Le photoamorceur (C) est un composé qui, en présence d'une source de lumière UV, va subir une réaction photoinduite et produire des espèces réactives, de nature radicalaire ou ionique qui induisent la photopolymérisation des fonctions éthyléniques insaturées et/ ou époxy. Le photoamorceur peut être radicalaire ou cationique. Le photoamorceur utilisé dans le procédé selon l'invention peut être un mélange de ces deux types de photoamorceur. Le photoamorceur radicalaire est choisi par exemple parmi les hydroxyalkylphénones, les α-aminocétones, les oxydes d'acylphosphine, les benzophénones, les dicétals benzyliques, les thioxanthones et leurs mélanges. De façon préférée, le photoamorceur est un oxyde d'acylphosphine, notamment le bis (2,4,6-triméthylbenzoyl)-phénylphosphineoxide, connu sous le nom commercial Irgacure 819, le 1-[4-(2-hydroxyéthoxy)-phényl]-2-hydroxy-2-méthyl-1-propane-1-one connu sous le nom commercial Irgacure 2959, le 2-2-diméthoxy-1,2-di(phényl)éthanone connu sous le nom commercial de Irgacure 651, le 2-(dimethylamino)-1-(4-morpholin-4-ylphenyl)-2-(phénylmethyl)butan-1-one connu sous le nom commercial de Irgacure 369, le bis(2,6-difluoro-3-(1-hydropyrro-1-yl)-phényl)titanocène connu sous le nom commercial de Irgacure 784, le 1-hydroxycyclohexyl)-phényl-méthanone connu sous le nom commercial de Irgacure 184. On peut aussi utiliser le produit connu sous le nom commercial Irgacure 500 qui est un mélange 1:1 de 50%poidsde 1-hydroxy-cyclohexyl-phenyl-cétone et de 50 %poids de benzophénone.

Les photoamorceurs cationiques sont des sels d'onium comme par exemple des sels de diaryliodonium ou de triarylsulfonium, ou des sels organométalliques, comme les sels de ferrocénium.

La teneur pondérale du composé photoamorceur (C) calculée sur la base de l'ensemble des composés (A), (B), (C) et (D), varie de 0,1 à 10% préférentiellement de 0,5 à 5%

Le monomère photopolymérisable (D) est préférentiellement choisi parmi les monomères à double liaison éthylénique, tels que les acrylates ou les méthacrylates d'alkyle et leurs dérivés, les acrylates ou les méthacrylates d'hydroxyalkyles, les monomères vinyliques aromatiques et leurs dérivés, les N-vinyl-lactames et leurs dérivés, les époxydes. Lorsqu'il est présent, c'est-à-dire principalement lorsque le composé (I) ne comprend que des groupements hydrolysables, le ratio molaire entre la quantité de monomère comprenant des fonctions polymérisables et la quantité de métal M est compris entre 1/10 et 10/1.

Le dépôt de la couche peut être réalisé par trempage (plus couramment connu sous le nom de « dip-coating »), par centrifugation (ou « spin-coating »), par pulvérisation, par enduction, par impression digitale ou par sérigraphie.

Selon un mode de réalisation, le dépôt de la couche est effectué par sérigraphie. Dans ce cas, la composition est constituée d'un sol (A), préparé dans un solvant présentant une température d'ébullition au moins égale à 150°C, et des constituants (B), (C), et éventuellement (D) décrits précédemment auxquels on ajoute au moins un agent épaississant (E) choisi parmi les dérivés non ioniques de la cellulose.

Dans la première étape de ce mode de réalisation qui consiste à déposer la couche par sérigraphie, l'épaisseur de la couche déposée (humide) peut atteindre 20 µm en un seul passage au travers de l'écran de sérigraphie. Bien que l'épaisseur de la couche soit importante, on n'observe pas de craquelures dans la couche finale après l'étape d'exposition à la source de lumière UV. L'épaisseur de la couche peut notamment être modulée en fonction de la capacité colorante des nanoparticules.

Le solvant utilisé si le dépôt est effectué par sérigraphie doit avoir un point d'ébullition au moins égal à 150°C, de préférence au plus égal à 300°C et avantageusement au plus égal à 250°C. On peut par exemple utiliser les éthers de glycols, notamment les alkyl éthers de polypropylène glycols. Les éthers méthyliques de dipropylène glycol sont particulièrement préférés.

L'agent épaississant (E) est un composé possédant un comportement rhéo-fluidifiant : il s'écoule sous cisaillement. Il permet d'adapter laviscosité de la composition afin que celle-ci puisse être appliquée par sérigraphie. En général, la viscosité mesurée avec un rhéomètre à géométrie cône plan varie de 5 à 50 Pa.s à une vitesse de cisaillement égale à 0,01 s⁻¹, ou est inférieure à 1 Pa.s à un cisaillement de 1000 s⁻¹. L'agent épaississant est de préférence choisi parmi les dérivés de la cellulose, en particulier les alkylcelluloses et les hydroxyalkylcelluloses, avantageusement les hydroxypropylcelluloses. La quantité d'agent épaississant à inclure dans la composition varie en fonction du poids moléculaire dudit agent. En général, l'agent épaississant représente moins de 5%du poids total de la formulation, et de préférence entre 0,1 et 3% poids.

Dans la deuxième étape du procédé, le substrat sur lequel a été appliquée la composition est exposé à une source de lumière UV. La couche devient alors solide. Tout type de source de lumière UV peut être utilisé à partir du moment où elle permet d'exciter le photoamorceur.

La durée d'irradiation varie en fonction de la source de lumière utilisée et de sa puissance, de la quantité et de la nature du photoamorceur, ainsi que de la quantité de précurseur du sel métallique.

Le procédé selon l'invention permet le dépôt de plusieurs couches de la composition précitée à la première étape, par exemple jusqu'à 10 couches qui peuvent être appliquées consécutivement ou de préférence après l'étape de séchage entre chaque couche visant à éliminer une partie des composés volatils.

Le procédé selon l'invention peut comprendre éventuellement une étape de séchage du substrat revêtu à une température comprise entre 60 et 200°C, de préférence entre 80 et 110°C.

Le substrat ainsi revêtu de la couche colorée peut être utilisé dans un système de double vitrage ou dans des verres feuilletés. La couche colorée est avantageusement située en face interne et est ainsi protégée puisqu'elle n'est pas en contact direct avec l'extérieur.

Une application en tant que verre monolithique peut également être envi sagée.

Pour certains types d'applications, il peut être intéressant de faire subir au substrat revêtu une trempe thermique à haute température.

Une autre divulgation est un vitrage comprenant au moins un substrat coloré susceptible d'être obtenu par le procédé décrit précédemment. Le vitrage peut en particulier être un vitrage feuilleté ou un double vitrage.

Les exemples ci-dessous illustrent l'invention, sans en limiter la portée.

### Exemple 1

On introduit 5,2g de 3-méthacryloxypropyltriméthoxysilane (MAPTMS) dans 0,6 g d'acide chlorhydrique à 10⁻² M. A 1 volume de sol, on ajoute 0,5 volume d'isopropanol. Le mélange est brièvement agité pour homogénéisation. A ce mélange, sont ajoutés 4 %en masse de photoamorceur Irgacure 2959 commercialisé par BASF. L'agitation est maintenue jusqu'à dissolution complète du photoamorceur. Le pilulier est gardé à l'abri de la lumière. 4%en masse de sels d'or (AuCl₄⁻) sont ajoutés, par ajout d'un acide fort HAuCl₄ libérant des sels tétrachloroauriques.

Une goutte de la formulation est déposée sur un substrat de verre puis est étalée par centrifugation, à l'aide d'un spin-coater, à une vitesse de 4000 rpm pendant environ 50 secondes, afin d'obtenir un revêtement mince et uniforme de l'ordre de 1µm. Le substrat ainsi revêtu est ensuite irradié sous une lampe UV-visible pendant 60 min. Ce temps est modulable selon l'intensité de la lampe, la quantité de photoamorceur et de sel métallique.

On obtient une couche colorée dans les teintes rose-violet foncées, sans craquelures.

### Exemple 2

1 mL de propoxyde de zirconium IV a été mélangé avec 1 mL d'acide méthacrylique, et l'ensemble est agité pendant quelques minutes. A un volume de cette solution, on ajoute un volume équivalent d'isopropanol, et on maintient l'agitation pour homogénéisation. A ce mélange, sont ajoutés 3 % en masse de photoamorceur (Irgacure 819 commercialisé par BASF). L'agitation est maintenue jusqu'à dissolution complète du photoamorceur. Le pilulier est gardé à l'abri de la lumière. 4%en masse de sels d'or (AuCl₄⁻) sont ajoutés, par ajout d'un acide fort HAuCl₄ libérant des sels tétrachloroauriques.

De la même façon que dans l'exemple 1, on forme par centrifugation un film mince sur un substrat en verre. Le substrat ainsi revêtu est ensuite irradié sous une lampe UV-visible pendant 60 min. On obtient une couche colorée dans les teintes violet-marron, sans craquelures. Après chauffage à 600°C, la coloration devient violet-bleu, et la couche reste stable et sans craquelures.

### Exemple 3

On reproduit l'exemple 1 en remplaçant l'isopropanol par 0,5 volume d'une solution comprenant 1,5% en masse d'hydroxypropylcellulose (Klucel® M commercialisé par AQUALON) dans l'éther de glycol (Dowanol® DPM).la composition obtenue est déposée sur une feuille de verre par sérigraphie sous la forme d'une couche d'une épaisseur d'environ 10µm. La feuille de verre ainsi revêtue est ensuite passée sous une lampe UV-visible, pendant 60 min. On obtient ainsi une feuille de verre revêtue d'une couche colorée de teinte rose-violet.

## Revendications

1. Procédé de fabrication d'un substrat coloré comportant au moins une couche colorée et transparente comprend les étapes consistant à :
- déposer, sur tout ou partie d'au moins une des faces du substrat, au moins une couche d'une composition comprenant
(A) un sol obtenu par hydrolyse acide et polycondensation d'au moins un composé de formule
MXₙY₄₋ₙ (I),
dans laquelle
M représente un atome de Si, Ti, Zr, Al, Sn, Fe, Y, V
X représente des groupements hydrolysables, identiques ou différents,
Y représente des groupements fonctionnels, identiques ou différents, l'un des Y ayant au moins une fonction photopolymérisable,
n peut prendre les valeurs 0, 1, 2, 3 ou 4,
ou un oligomère dérivé de ce composé (I),
(B) au moins un précurseur d'un sel métallique, le sel métallique étant un halogénure tel qu'un chlorure ou un bromure, un nitrure et un acétate d'un métal choisi parmi l'or, l'argent, le platine ou le palladium, et
(C) au moins un composé photoamorceur,
(D) éventuellement un monomère photopolymérisable, et
- exposer le substrat revêtu d'au moins ladite couche à une source de lumière UV.

2. Procédé selon la revendication 1 **caractérisé en ce que** le groupement Y comprend au moins un groupement éthylénique insaturé, tel qu'une fonction acrylate ou méthacrylate, ou au moins un groupement époxy.

3. Procédé selon l'une des revendications précédentes **caractérisé en ce que** M représente un atome de Si, de Ti, ou de Zr.

4. Procédé selon l'une des revendications précédentes **caractérisé en ce que** la teneur pondérale du précurseur de sel métallique (B) calculée sur la base de l'ensemble des composés (A), (B), (C) et (D), varie de 0,1 à 10%, préférentiellement de 0,5 à 5%.

5. Procédé selon l'une des revendications précédentes **caractérisé en ce que** le photoamorceur est choisi parmi les hydroxyalkylphénones, les α-aminocétones, les oxydes d'acylphosphine, les benzophénones, les dicétals benzyliques, les thioxanthones, les sels d'onium ou les sels de ferrocénium, et leurs mélanges.

6. Procédé selon l'une des revendications précédente **caractérisé en ce que** la teneur pondérale du composé photoamorceur (C) calculée sur la base de l'ensemble des composés (A), (B), (C) et (D), varie de 0,1 à 10%, préférentiellement de 0,5 à 5%.

7. Procédé selon l'une des revendications précédentes **caractérisé en ce que** le monomère photopolymérisable est choisi parmi les acrylates ou les méthacrylates d'alkyle et leurs dérivés, les acrylates ou les méthacrylates d'hydroxyalkyles, les monomères vinyliques aromatiques et leurs dérivés, les N-vinyl-lactames et leurs dérivés et les époxydes.

8. Procédé selon l'une des revendications précédentes **caractérisé en ce que** le sol (A) comprend en outre un organosilane de formule
R¹ₐSi X₍₄₋ₐ₎ (II)
dans laquelle
R¹ représente un radical non hydrolysable, de préférence un radical alkyle, un radical alcényle, un radical alcynyle, ou un radical aryle, portant éventuellement un groupement fonctionnel,
X a la signification donnée précédemment dans la formule (I),
a est égal à 0, 1, 2 ou 3,
ou un oligomère dérivé de ce silane.

9. Procédé selon l'une des revendications précédentes **caractérisé en ce que** le dépôt est effectué par sérigraphie.

10. Procédé selon la revendication 9 **caractérisé en ce que** la composition est constituée d'un sol (A), préparé dans un solvant présentant une température d'ébullition au moins égale à 150°C, et des constituants (B), (C), et éventuellement (D) auxquels on ajoute au moins un agent épaississant (E) choisi parmi les dérivés non ioniques de la cellulose.

11. Procédé selon la revendication 10 **caractérisé en ce que** le solvant est un éther de glycol, de préférence un éther méthylique de dipropylène glycol, et l'agent épaississant est un alkylcellulose ou un hydroxyalkylcellulose.

12. Procédé selon l'une des revendications précédentes **caractérisé en ce que** le substrat est en plastique ou en verre.

13. Procédé selon l'une des revendications précédentes **caractérisé en ce qu'**il comprend une étape de séchage réalisée à une température comprise entre 60 et 200°C, de préférence entre 80 et 110°C.

## Patentansprüche

1. Verfahren zur Herstellung eines gefärbten Substrats, umfassend mindestens eine gefärbte und transparente Schicht, umfassend die Schritte bestehend aus:
- Abscheiden, auf der gesamten oder einem Teil mindestens einer der Flächen des Substrats, mindestens einer Schicht einer Zusammensetzung, umfassend:
(A) ein Sol, das erhalten wird durch saure Hydrolyse und Polykondensation mindestens einer Verbindung mit der Formel
MXₙY₄₋ₙ (I),
wobei
M ein Si-, Ti-, Zr-, Al-, Sn-, Fe-, Y-, V-Atom darstellt,
X hydrolysierbare Gruppen darstellt, identisch oder verschieden,
Y funktionelle Gruppen darstellt, identisch oder verschieden, wobei eines der Y mindestens eine fotopolymerisierbare Funktion aufweist,
n die Werte 0, 1, 2, 3 oder 4 annehmen kann,
oder eines von dieser Verbindung (I) abgeleiteten Oligomers,
(B) mindestens einen Vorläufer eines Metallsalzes, wobei das Metallsalz ein Halogenid, wie Chlorid oder Bromid, ein Nitrid und ein Acetat eines Metalls, ausgewählt aus Gold, Silber, Platin oder Palladium, ist, und
(C) mindestens eine Fotoinitiator-Verbindung,
(D) gegebenenfalls ein fotopolymerisierbares Monomer, und
- Aussetzen des Substrats, das mit mindestens der Schicht beschichtet ist, an eine UV-Lichtquelle.

2. Verfahren nach Anspruch 1,
**dadurch gekennzeichnet, dass** die Gruppe Y mindestens eine ungesättigte Ethylengruppe, wie eine Acrylat- oder Methacrylatfunktion, oder mindestens eine Epoxygruppe umfasst.

3. Verfahren nach einem der vorhergehenden Ansprüche,
**dadurch gekennzeichnet, dass** M ein Si-, Ti- oder Zr-Atom darstellt.

4. Verfahren nach einem der vorhergehenden Ansprüche,
**dadurch gekennzeichnet, dass** der Gewichtsgehalt des Vorläufers (B) des Metallsalzes, berechnet auf der Basis der Gesamtheit der Verbindungen (A), (B), (C) und (D), von 0,1 bis 10 %, vorzugsweise von 0,5 bis 5 % variiert.

5. Verfahren nach einem der vorhergehenden Ansprüche,
**dadurch gekennzeichnet, dass** der Fotoinitiator ausgewählt wird aus Hydroxyalkylphenonen, α-Aminoketonen, Acylphosphinoxiden, Benzophenonen, Benzyldiketalen, Thioxanthonen, Oniumsalzen oder Ferroceniumsalzen, und ihren Mischungen.

6. Verfahren nach einem der vorhergehenden Ansprüche,
**dadurch gekennzeichnet, dass** der Gewichtsgehalt der Fotoinitiator-Verbindung (C), der auf der Basis der Gesamtheit der Verbindungen (A), (B), (C) und (D) berechnet wird, von 0,1 bis 10 %, vorzugsweise von 0,5 bis 5 % variiert.

7. Verfahren nach einem der vorhergehenden Ansprüche,
**dadurch gekennzeichnet, dass** das fotopolymerisierbare Monomer ausgewählt wird aus Alkylacrylaten oder -methacrylaten und ihren Derivaten, Hydroxylalkylacrylaten oder -methacrylaten, aromatischen Vinylmonomeren und ihren Derivaten, N-Vinyllactamen und ihren Derivaten und Epoxiden.

8. Verfahren nach einem der vorhergehenden Ansprüche,
**dadurch gekennzeichnet, dass** das Sol (A) außerdem ein Organosilan mit der Formel umfasst:
R¹ₐSiX(₄₋ₐ) (II),
wobei
R¹ einen nicht-hydrolysierbaren Rest, vorzugsweise einen Alkylrest, einen Alkenylrest, einen Alkynylrest oder einen Arylrest darstellt, der gegebenenfalls eine funktionelle Gruppe trägt,
X die vorstehend in der Formel (I) angegebene Bedeutung hat,
a gleich 0, 1, 2 oder 3 ist,
oder ein von diesem Silan abgeleitetes Oligomer.

9. Verfahren nach einem der vorhergehenden Ansprüche,
**dadurch gekennzeichnet, dass** die Abscheidung durch Siebdruck durchgeführt wird.

10. Verfahren nach Anspruch 9,
**dadurch gekennzeichnet, dass** die Zusammensetzung besteht aus einem Sol (A), der in einem Lösungsmittel mit einer Kochtemperatur von mindestens gleich 150 °C hergestellt wird, und den Bestandteilen (B), (C) und gegebenenfalls (D), denen mindestens ein Verdickungsmittel (E) zugesetzt wird, das aus nicht-ionischen Derivaten von Cellulose ausgewählt wird.

11. Verfahren nach Anspruch 10,
**dadurch gekennzeichnet, dass** das Lösungsmittel Glykolether, vorzugsweise Dipropylenglykolmethylether ist, und das Verdickungsmittel Alkylcellulose oder Hydroxyalkylcellulose ist.

12. Verfahren nach einem der vorhergehenden Ansprüche,
**dadurch gekennzeichnet, dass** das Substrat aus Kunststoff oder Glas ist.

13. Verfahren nach einem der vorhergehenden Ansprüche,
**dadurch gekennzeichnet, dass** dieses einen Schritt der Trocknung umfasst, der bei einer Temperatur zwischen 60 und 200 °C, vorzugsweise zwischen 80 und 110 °C durchgeführt wird.

## Claims

1. Process for manufacturing a coloured substrate comprising at least one coloured and transparent layer which comprises the steps consisting in:
- depositing, over all or part of at least one of the faces of the substrate, at least one layer of a composition comprising
(A) a sol obtained by acid hydrolysis and polycondensation of at least one compound of formula
MXₙY₄₋ₙ (I),
wherein
M represents an Si, Ti, Zr, Al, Sn, Fe, Y or V atom,
X represents identical or different hydrolyzable groups,
Y represents identical or different functional groups, one of the Y groups having at least one photopolymerizable function,
n may take the values 0, 1, 2, 3 or 4,
or an oligomer derived from this compound (I),
(B) at least one precursor of a metal salt, the metal salt being a halide such as a chloride or a bromide, a nitride and an acetate of a metal selected from gold, silver, platinum or palladium, and
(C) at least one photoinitiator compound,
(D) optionally a photopolymerizable monomer, and
- exposing the substrate coated with at least said layer to a source of UV light.

2. Process according to Claim 1, **characterized in that** the Y group comprises at least one unsaturated ethylenic group, such as an acrylate or methacrylate function, or at least one epoxy group.

3. Process according to either of the preceding claims, **characterized in that** M represents an Si, Ti or Zr atom.

4. Process according to one of the preceding claims, **characterized in that** the weight content of the metal salt precursor (B) calculated on the basis of all of the compounds (A), (B), (C) and (D) varies from 0.1% to 10%, preferably from 0.5% to 5%.

5. Process according to one of the preceding claims, **characterized in that** the photoinitiator is selected from hydroxyalkylphenones, α-aminoketones, acylphosphine oxides, benzophenones, benzyl diketals, thioxanthones, onium salts or ferrocenium salts, and mixtures thereof.

6. Process according to one of the preceding claims, **characterized in that** the weight content of the photoinitiator compound (C) calculated on the basis of all of the compounds (A), (B), (C) and (D), varies from 0.1% to 10%, preferably from 0.5% to 5%.

7. Process according to one of the preceding claims, **characterized in that** the photopolymerizable monomer is selected from alkyl acrylates or methacrylates and derivatives thereof, hydroxyalkyl acrylates or methacrylates, vinyl aromatic monomers and derivatives thereof, N-vinyl lactams and derivatives thereof, and epoxides.

8. Process according to one of the preceding claims, **characterized in that** the sol (A) additionally comprises an organosilane of formula
R¹ₐSi X₍₄₋ₐ₎ (II)
wherein
R¹ represents a non-hydrolyzable radical, preferably an alkyl radical, an alkenyl radical, an alkynyl radical or an aryl radical, optionally bearing a functional group,
X has the meaning given above in formula (I),
a is equal to 0, 1, 2 or 3,
or an oligomer derived from this silane.

9. Process according to one of the preceding claims, **characterized in that** the deposition is carried out by screenprinting.

10. Process according to Claim 9, **characterized in that** the composition consists of a sol (A), prepared in a solvent having a boiling point at least equal to 150°C, and constituents (B), (C), and optionally (D), to which at least one thickener (E) selected from non-ionic derivatives of cellulose is added.

11. Process according to Claim 10, **characterized in that** the solvent is a glycol ether, preferably a dipropylene glycol methyl ether, and the thickener is an alkyl cellulose or a hydroxyalkyl cellulose.

12. Process according to one of the preceding claims, **characterized in that** the substrate is made of plastic or of glass.

13. Process according to one of the preceding claims, **characterized in that** it comprises a drying step carried out at a temperature of between 60°C and 200°C, preferably between 80°C and 110°C.
